# EUROPEAN PATENT APPLICATION

(11) **EP 4 686 896 A1**
(43) Date of publication of application: **04.02.2026**
(21) Application number: 24191837.4
(22) Date of filing: 30.07.2024
(51) Int. Cl.: F24H 9/13, F16L 47/24

(54) **PLASTIC DIELECTRIC COMBINED WITH WATER INJECTION PIPE**

(71) Applicant: BDR Thermea Group B.V., 7332 BD Apeldoorn (NL)
(72) Inventor: SIEGEL, Christophe, 7332 BD Apeldoorn (NL); LENC, Kevin, 7332 BD Apeldoorn (NL); WERNERT, Stéphane, 7332 BD Apeldoorn (NL)
(74) Representative: Grabovac, Dalibor

(57) **Abstract**

There is provided a connection device for connecting a tank pipe of a domestic hot water tank with an external pipe external to the domestic hot water tank. The connection device comprises an injection pipe configured to be insertable into the tank pipe and configured to guide a liquid through the tank pipe and into the domestic hot water tank or out of the domestic hot water tank; and a plastic dielectric comprising a first portion and a second portion. The first portion directly surrounds at least an end portion of the injection pipe. The second portion indirectly surrounds the injection pipe and is spaced apart from the injection pipe, and wherein the second portion is configured to be in contact with an outer surface of the tank pipe and wherein the second portion is further configured so that, when the injection pipe is inserted into the tank pipe, the tank pipe is between the injection pipe and the second portion. The plastic dielectric is configured to connect the injection pipe with the external pipe. The injection pipe is directly connected to the first portion of the plastic dielectric, and/or a gasket comprising a soft rotational shape of decreasing or constant cross-section, in particular a revolutionary shape, is placed between the injection pipe and the second portion of the plastic dielectric.

## Description

### FIELD OF THE INVENTION

The invention relates to a plastic dielectric combined with water injection pipe. In more detail, the invention relates to a connection device, a domestic hot water tank comprising the connection device, a domestic hot water tank assembly comprising the connection device and an assembly kit comprising the connection device.

### BACKGROUND

A heating device like a heat pump or a boiler or an electric water heater is a device able to warm domestic water by transferring thermal energy to water by means of a heat exchanger. Water is hold and heated inside a tank and is supplied outside the tank by means of a pipe assembly. The pipes are usually made of metallic materials. However, the contact between two different metallic parts in presence with an electrolyte, such as water, provides galvanic corrosion which can result in a water leakage.

In prior art, several configurations to connect two pipes of different materials, for example a steel pipe and a copper pipe, are known. For example, a turning brass nut is in contact with the steel pipe and provides a galvanic torque, thereby generating corrosion. The use of a fiber gasket which soak itself with electrolyte also provides a galvanic torque between the copper pipe, in particular its beaten collar, and the steel pipe, and produces therefore corrosion. In other words, in a standard configuration, two possible sources of corrosion can occur, one between the two pipes and the other between one pipe and the nut. According to a possible prior art solution to avoid said corrosion issues, an additional dielectric fitting in plastic can be placed between the steel pipe and the copper pipe for uncoupling the pipes of different materials. However, this solution can be achieved with additional costs. Also, there are two tightness devices, thereby increasing leakage risks.

Moreover, in prior art, one or more injection tubes are regularly used in hot water tanks. They are used to guide the water entering, re-entering or leaving the tank to the correct level/height.

Because of the difference in density of water as a function of temperature, it is known that the hottest water is at the top of the tank and the coldest water is at the lowest point. This phenomenon is called stratification.

It is therefore common practice to ensure that the water entering the tank is guided to the lower part of the tank. This avoids mixing water that has already been heated with cold water, which would result in water that is potentially too cold/temperate and therefore unsatisfactory for the customer.

At the same time, the water that is removed from the tank for use is removed from the upper part of the tank. This enables the customer to be supplied with the water best suited to their needs (which they can then temper using thermostatic taps, for example). The water that is reinjected is tempered and is therefore positioned at a medium height.

Depending on the type of tank used and the position of a tank's connecting pipes, the water will be guided into the tank at a high or low point. That is the reason why injection tubes are used.

Hence, there are several drawbacks available and constraints to be considered regarding the connection of a liquid tank, in particular of a domestic hot water tank, to an external pipe. Thus, there is room and need for improvement.

### SUMMARY

In view of the above, it is an object of the present disclosure to overcome at least part of the drawbacks nowadays available when it comes to connection a liquid tank, in particular a domestic hot water tank, to an external pipe.

Thus, according to several examples of the present disclosure, there is provided, according to a first aspect, a connection device for connecting a tank pipe of a domestic hot water tank with an external pipe external to the domestic hot water tank. The connection device comprises an injection pipe configured to be insertable into the tank pipe and configured to guide a liquid through the tank pipe and into the domestic hot water tank or out of the domestic hot water tank; and a plastic dielectric comprising a first portion and a second portion. The first portion directly surrounds at least an end portion of the injection pipe. The second portion indirectly surrounds the injection pipe and is spaced apart from the injection pipe, and wherein the second portion is configured to be in contact with an outer surface of the tank pipe and wherein the second portion is further configured so that, when the injection pipe is inserted into the tank pipe, the tank pipe is between the injection pipe and the second portion. The plastic dielectric is configured to connect the injection pipe with the external pipe. The injection pipe is directly connected to the first portion of the plastic dielectric, and/or a gasket comprising a soft rotational shape of decreasing or constant cross-section, in particular a revolutionary shape, is placed between the injection pipe and the second portion of the plastic dielectric. A revolutionary shape within this application means that there is no angular orientation regarding the injection pipe axis. Such a revolutionary shape has the additional advantage of an optimized form which does not impose any particular mounting orientation. A constraint on mounting orientation leads to additional time needed for assembly and leads to additional control steps both during assembly and for the quality control of the assembly as a misorientation in case of an angular orientation regarding the injection pipe axis which was not properly aligned during assembly can lead to leakage.

Thus, basically, the purpose of the connection device according to the first aspect is to use the injection pipe, which is mandatory for guiding purposes as already indicated above, to also be part of an anti-corrosion connection system.

It shall be noted that by domestic hot water tank, it is meant a tank for storing domestic water from an open loop circuit, for consumption and tapping at extraction points (taps, showers, etc.).. The tank can also have the function to heat water, for example by an internal or external heat exchanger or an electric heater, and/or can be connected to a heating device such as boiler or heat pump.

The liquid guided through the tank pipe may be hot water.

By directly surrounds it is meant that the first portion is in direct contact with at least an end portion of the injection pipe. By indirectly surrounds it is meant that the second portion is spaced apart from the injection pipe, i.e. there is a space between the second portion and the injection pipe and/or that at least another part is positioned between the second portion and the injection pipe.

The connection device according to the first aspect is advantageous in that it enables to provide a plastic dielectric or dielectric fitting which can be combined with a water injection pipe for example. It is further enabled water tightness on a flat gasket and not on threads, and galvanic corrosion on threads is avoided. It is further enabled a concept at low cost, since plastic for a dielectric fitting is less expensive than steel. Moreover, it is enabled to block the injection pipe in position to maintain functionality. Furthermore, usage of two gaskets between the plastic dielectric and the tank pipe is avoided. Moreover, the injection pipe, which is mandatory for guiding water, is used as part of an anti-corrosion system, which is mandatory for preventing corrosion and leakage. Thus, by combining the different functions, it is further enabled to reduce cost and also to ensure that one of the two functions is not forgotten, so a risk of leaks is further reduced. By integrating the connection function directly into the injection tube, it is enabled to deliver the tank directly with the connection, preventing people from forgetting to connect it.

According to several examples of the present disclosure, the injection pipe may be made of an electrically non-conductive material, in particular plastic, or may be made of stainless steel.

Hence, the connection device is usable with different types of injection pipes. Thus, an applicability of the connection device according to several use cases is provided.

According to several examples of the present disclosure, the gasket, which may be arranged in direct contact around the injection pipe, may comprise a first end section partly oriented towards the first portion and a second end section opposite to the first end section, and wherein the gasket may have a flat surface partly oriented towards the first portion, and wherein an external cross-section of the gasket may decrease, preferably discontinuously, from the first end section towards the second end section.

Hence, a clamping force for holding the connection device in position may further be increased. Thus, a fitting of the connection device and a tightness provided by the connection device may further be increased.

According to several examples of the present disclosure, the injection pipe directly connected to the first portion may comprise that the injection pipe is positioned in the plastic dielectric by at least one of clipping, crimping and plastic soldering.

It shall be noted that the clipping, crimping and/or plastic soldering may be performed manually or automatically.

Hence, the injection pipe and the plastic dielectric may be produced or manufactured separately or individually. Thus, production costs may be reduced.

According to several examples of the present disclosure, a translation of the injection pipe relative to the plastic dielectric along the injection tube axis may be prevented by a protuberance present on the injection pipe and/or on the plastic dielectric, wherein the protuberance may be integrated into the plastic dielectric useable as a clip, or wherein the protuberance may be generated by a crimping process.

It shall be noted that by protuberance present on the injection pipe, it may be meant a protuberance on the outer surface of the injection pipe (the surface facing the plastic dielectric), that extends toward the inside of the injection pipe or that extends toward the outside of the injection pipe. It shall be noted that by protuberance present on the plastic dielectric, it may be meant a protuberance on the inner surface of the plastic dielectric (the surface facing the injection pipe), that extends toward the inside of the plastic dielectric or that extends toward the outside of the plastic dielectric. One or more protuberance present on the injection pipe may form counterparts for one or more protuberance present on the plastic dielectric. Thus, a protuberance present on the injection pipe may be arranged, fixed or mounted at a protuberance present on the plastic dielectric.

Hence, the injection pipe may be efficiently arranged and held in position within the plastic dielectric. This also means that a sub-assembly comprising the injection hose and the dielectric fitting can be transported, handled and delivered together. This makes the system more compact during the logistical flow, i.e. reduce transport costs, logistical footprint, storage costs, etc. It also ensures that one of the components of the assembly is not lost or forgotten during assembly.

According to several examples of the present disclosure, for the injection pipe directly connected to the first portion, a flat gasket may be in contact with an inner surface of the second portion of the plastic dielectric, so that the plastic dielectric may be configured to be in further contact with the outer surface of the tank pipe via the flat gasket when the injection pipe is inserted into the tank pipe.

Hence, increased water tightness provided by the connection device is achieved.

According to several examples of the present disclosure, the plastic dielectric and the injection pipe may be made in a single plastic piece.

Hence, installation of the connection device is even further facilitated. Moreover, is it improved cost optimisation, supply chain cost reduction as well as compacity.

According to several examples of the present disclosure, the gasket may be an elastomer or a silicone.

Hence, costs are further reduced.

According to several examples of the present disclosure, the elastomer may be made of EPDM or rubber-like elastomer, and/or wherein the elastomer has a certification for contact with domestic water, in particular with domestic water from 10°C to at least 65°C, preferably with domestic water from 10°C to 90°C.

Hence, resilience of the elastomer is increased. This makes it possible to compensate for surface defects or to be compatible for installation with lower manufacturing requirements. In fact, thanks to these resilient and deformable materials, it is possible to obtain a seal even if the parts connected to each other are not perfectly against each other, for example due to manufacturing tolerances, slight misalignment, surface defects, etc.

According to several examples of the present disclosure, the gasket may extend along a length direction of the injection pipe, and the injection pipe when being inserted into the tank pipe may be configured to be installed inside the tank pipe by friction of the gasket with an inner surface of the tank pipe.

Hence, installation of the connection device is simplified, the connection device is hold in position more reliably, and water tightness capabilities of the connection device are further increased.

According to a second aspect of the present invention, there is disclosed a domestic hot water tank. The domestic hot water tank comprises a first opening forming a tank inlet, for a liquid to enter the domestic hot water tank; a second opening forming a tank outlet, for a liquid to exit the domestic hot water tank; optionally a third opening forming a second tank inlet, for a liquid to re-enter the domestic hot water tank in case of system integrating a recirculation function; a tank pipe mounted at one of the first opening, the second opening and/or the third opening, for the liquid to enter, exit and/or re-enter the domestic hot water tank through the tank pipe; and a connection device according to the first aspect. The connection device is inserted into the tank pipe and is connectable with an external pipe external to the domestic hot water tank for connecting the domestic hot water tank with the external pipe. Moreover, the injection pipe, which is mandatory for guiding water, is used as part of an anti-corrosion system, which is mandatory for preventing corrosion and leakage. Thus, by combining the different functions, it is further enabled to reduce cost and also to ensure that one of the two functions is not forgotten, so a risk of leaks is further reduced. By integrating the connection function directly into the injection tube, it is enabled to deliver the tank directly with the connection, preventing people from forgetting to connect it.

The domestic hot water tank according to the second aspect is advantageous in that it enables to provide a plastic dielectric or dielectric fitting which can be combined with a water injection pipe for example. It is further enabled water tightness on a flat gasket and not on threads, and galvanic corrosion on threads is avoided. It is further enabled a concept at low cost, since plastic for a dielectric fitting is less expensive than steel. Moreover, it is enabled to block the injection pipe in position to maintain functionality. Furthermore, usage of two gaskets between the plastic dielectric and the tank pipe is avoided. Reliability of the assembly and in particular of the sealing is also improved.

According to several examples of the present disclosure, the flat gasket may be in direct contact with the plastic dielectric, the injection pipe and the tank pipe for achieving water tightness, the gasket may be in direct contact with the plastic dielectric, the injection pipe and the tank pipe for achieving water tightness.

Hence, a risk of breakage due to an over-torque may be reduced.

According to several examples of the present disclosure, the connection device may comprise the soft revolutionary part of the gasket. The soft revolutionary part of the gasket may extend along a length direction of the injection pipe between the injection pipe and the tank pipe. The soft revolutionary part of the conical gasket may extend along the length direction for at least 5%, preferably at least 15% of a length of the tank pipe.

Hence, an unnecessary long soft revolutionary part is avoided and resource efficiency is increased. Moreover, installation of the connection device is simplified, the connection device is hold in position more reliably, and water tightness capabilities of the connection device are further increased.

According to a third aspect of the present invention, there is disclosed a domestic hot water tank assembly. The domestic hot water tank assembly comprises the domestic hot water tank according to the second aspect; and an external pipe external to the domestic hot water tank. The external pipe is connected to the domestic hot water tank via the connection device of the domestic hot water tank. The external pipe is made of copper.

The domestic hot water tank assembly according to the third aspect is advantageous in that it enables to provide a plastic dielectric or dielectric fitting which can be combined with a water injection pipe for example. It is further enabled water tightness on a flat gasket and not on threads, and galvanic corrosion on threads is avoided. It is further enabled a concept at low cost, since plastic for a dielectric fitting is less expensive than steel. Moreover, it is enabled to block the injection pipe in position to maintain functionality. Furthermore, usage of two gaskets between the plastic dielectric and the tank pipe is avoided. Moreover, the injection pipe, which is mandatory for guiding water, is used as part of an anti-corrosion system, which is mandatory for preventing corrosion and leakage. Thus, by combining the different functions, it is further enabled to reduce cost and also to ensure that one of the two functions is not forgotten, so a risk of leaks is further reduced. By integrating the connection function directly into the injection tube, it is enabled to deliver the tank directly with the connection, preventing people from forgetting to connect it.

According to a fourth aspect of the present invention, there is disclosed an assembly kit comprising the connection device according to the first aspect.

The assembly kit according to the fourth aspect is advantageous in that it enables to provide a plastic dielectric or dielectric fitting which can be combined with a water injection pipe for example. It is further enabled water tightness on a flat gasket and not on threads, and galvanic corrosion on threads is avoided. It is further enabled a concept at low cost, since plastic for a dielectric fitting is less expensive than steel. Moreover, it is enabled to block the injection pipe in position to maintain functionality. Furthermore, usage of two gaskets between the plastic dielectric and the tank pipe is avoided. Moreover, the injection pipe, which is mandatory for guiding water, is used as part of an anti-corrosion system, which is mandatory for preventing corrosion and leakage. Thus, by combining the different functions, it is further enabled to reduce cost and also to ensure that one of the two functions is not forgotten, so a risk of leaks is further reduced. By integrating the connection function directly into the injection tube, it is enabled to deliver the tank directly with the connection, preventing people from forgetting to connect it.

Optional features of the first aspect and/or the second aspect may form part of any of the respectively other aspects, mutatis mutandis.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

### BRIEF DESCRIPTION OF THE DRAWINGS

A detailed description will now be given, by way of example only, with reference to the accompanying drawing, in which:
- Figure 1 shows a connection device according to several examples of the present disclosure;
- Figure 2 shows a cross-sectional view of a connection device according to a first embodiment of the present disclosure;
- Figure 3a shows a cross-sectional view of a connection device according to a second embodiment of the present disclosure;
- Figure 3b shows a cross-sectional view of a connection device according to a further development of the second embodiment of the present disclosure;
- Figure 3c shows the plastic dielectric according to the further development of the second embodiment in more detail;
- Figure 4 shows an exploded view of the connection device according to the first embodiment of the present disclosure;
- Figure 5 shows an exploded view of the connection device according to the second embodiment of the present disclosure;
- Figure 6 shows a cross-section side view of a domestic hot water tank according to several examples of the present disclosure;
- Figure 7 shows a cross-section side view of a domestic hot water tank assembly according to several examples of the present disclosure;
- Figure 8 shows a first prior art concept; and
- Figure 9 shows a second prior art concept.

### DETAILED DESCRIPTION

Generally, the use of a plastic dielectric imposes to use two soft gaskets on two sides between inlet and outlet. This is needed because plastic has a bigger elongation as steel, therefore the soft gasket will compensate this displacement to warranty water tightness. First, the dielectric plastic and the injection pipe is screwed on the tank pipe, and a first soft gasket is used. I.e., usually, the injection is connected directly and is held only with the tank pipe, by way of soldering of friction. And a dielectric is used on the top of the tank pipe and injection pipe. Second, a copper tube for example is screwed on the dielectric plastic, and a second soft gasket is used. In contrast thereto, according to several examples of the present disclosure, what is not present in prior art, is that the injection pipe is used directly combined with the dielectric solution.

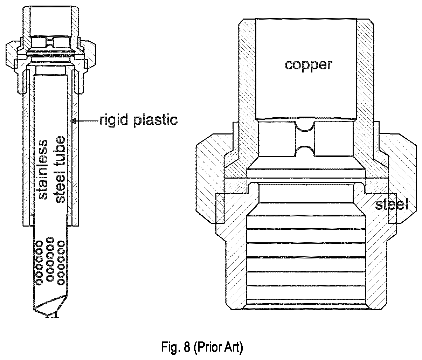

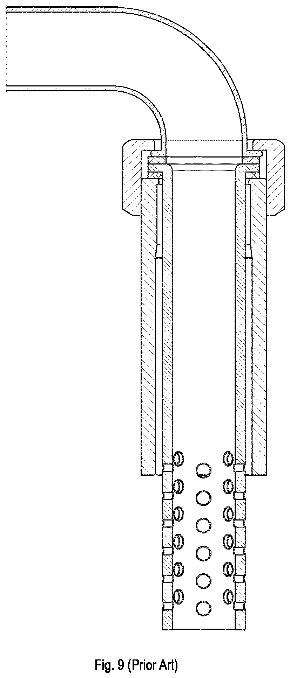

Two different prior art concepts are outlined below for reasons of understandability only with reference to Figures 8 and 9.

First, it shall be noted that in the prior art, the following two functions are performed separately:
1) Guiding water from a tank inlet/outlet to an inlet where it is to be inserted/withdrawn into the tank: As low as possible in the tank for cold water and as high as possible in the tank for hot water. And by reducing disturbance as low as possible on the flow in the volume of water, to ensure good stratification in the water tank.
2) Electrically uncoupling the installation circuit: Tubes, for example made of copper, from the tank, which is made of steel for example, by creating a bridge that does not allow electrolysis between two materials, i.e, between copper and steel for example, to prevent galvanic corrosion.

Various solutions are known for these two functions, as outlined below in detail.

According to a first prior art concept, with reference to Figure 8:
- (left image shown in Figure 8) The water is guided via a stainless-steel injection pipe inserted into the steel pipe welded to the tank (bearing a thread), with a part ("rigid plastic" highlighted by arrow) interfacing radially between the injection pipe and the steel pipe to hold it in place and to electrically uncouple the injection pipe and the steel pipe. Tightness on thread with tow and paste, which causes an issue with galvanic corrosion on threads because not electrically uncoupled.
- (right image shown in Figure 8) Dielectric in steel and brass uncoupled by seal, which causes an issue with high cost.

According to several examples of the present disclosure, the following differences in comparison to the first prior art concept may be pointed out.

In prior art, there is the "rigid plastic" or "rigid sock" (highlighted by arrow), which is very rigid, so a seal (with tow and pate) is to be added in addition to the sock. This sock is made of a hard plastic (for example PP, ABS, PS,...). Thus, the first prior art concept neither achieves:
i) water tightness on flat gasket and not on threads (to avoid galvanic corrosion on threads,
nor ii) a concept at low cost, since steel is more expensive than plastic for a dielectric fitting.

Furthermore, at the first prior art concept, without a sealing gasket by using tightness on threads (EN10226), there is galvanic corrosion. In contrast thereto, according to several examples of the present invention, a soft sock, an EPDM-type seal for example, may be provided to guarantee both a sock function and sealing.

According to a second prior art concept, with reference to Figure 9:
Tightness is on flat gasket, and it is impossible to add a dielectric in plastic to achieve tightness on a double, because of a high torque being mandatory to tight and a structural resistance of a plastic dielectric is not high enough. If two gaskets are used, a high torque must be applied to ensure that they are sufficiently compressed to prevent the passage of water. As seals have a high coefficient of friction, using two seals creates particularly high resistance. The fact of tightening with a large torque to enable sealing when using two seals generates a large force on the assembly, and there is a significant risk of one of the elements breaking, in particular a dielectric made of plastic.

Thus, it is only possible to add a dielectric in steel/brass to withstand high torque, so ii) is not achieved, i.e. a concept at low cost.

Until now, the solution as provided according to several examples of the present disclosure had never been used because it is known that hot water tanks are not supplied with an electric decoupling device mounted directly on the product. In general, this is an accessory that an installer installs as an interface between the tank connection and the pipe from the installation site.

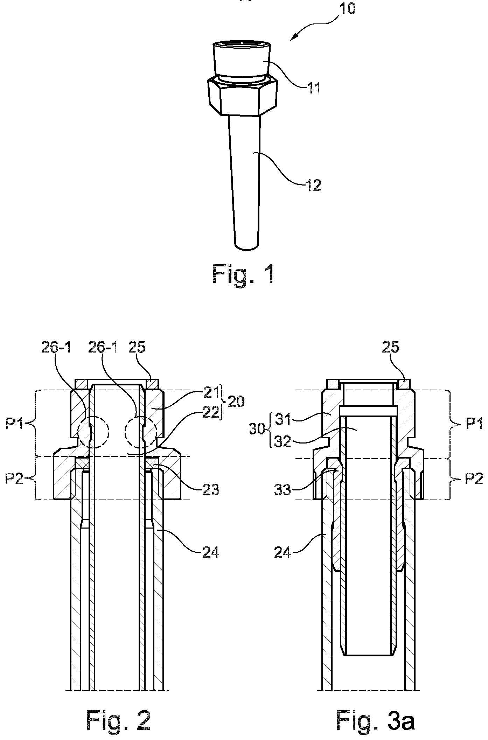

Referring now to Figure 1, Figure 1 shows a connection device according to several examples of the present disclosure. In particular, it is shown a connection device 10, which comprises a plastic dielectric 11 and an injection pipe 12 in a combined state.

Referring now to Figure 2, Figure 2 shows a cross sectional view of a connection device according to a first embodiment of the present disclosure. In particular, it is shown a connection device 20, which comprises a plastic dielectric 21 and an injection pipe 22 in a combined state. The connection device 20 according to Figure 2 may be such connection device 10 as shown in Figure 1. Figure 2 further shows a tank pipe 24, into which the injection pipe 22 is inserted, and flat gasket 23, which is arranged between and in direct contact with an end section of the tank pipe 24 and the plastic dielectric 21. The plastic dielectric 21 may be understood as comprising two portions, a first portion P1 and a second portion P2. The first portion P1 directly surrounds at least an end portion of the injection pipe 22. The second portion P2 is in contact with an outer surface of the tank pipe 24. The second portion P2 may be screwed upon the tank pipe 24, i.e. the inner surface of the second portion P2 facing the tank pipe 24 comprises a thread and the corresponding outer surface of the tank pile 24 comprises a corresponding thread. The tank pipe 24, into which the injection pipe 22 is inserted, is between the injection pipe 22 and the second portion P2. A gasket 25 is provided at an end section of the plastic dielectric 21 (of the first portion P1 in particular) for connecting the plastic dielectric 21 to an external tube or pipe, in particular for providing tightness between the external tube or pipe, for example a copper pipe, and the plastic dielectric 21. Moreover, as derivable from Figure 2, protuberances 26-1 and 26-2 are present on the injection pipe 22 and on the plastic dielectric 21, for example for clipping the injection pipe 22 into the plastic dielectric 21. The protuberances on the injection pipe 22 have a countershape to a shape of the protuberances on the plastic dielectric 21. Thus, a translation of the injection pipe 22 relative to the plastic dielectric 21 along the injection tube axis is prevented. The injection pipe 22 is directly connected to the first portion P1 of the plastic dielectric.

With further reference to Figure 2, the injection pipe 22 is clipped in the plastic dielectric 21 for example. The plastic dielectric 21 does not need to resist to high torque because only one gasket, i.e. the flat gasket 23, is used for this assembly, between the connection device and the tank pipe (another could be present between the external pipe and the connection device). Also, the injection pipe 22 is not mounted on the tank pipe 24. The injection pipe 22 can be in plastic or in stainless steel.

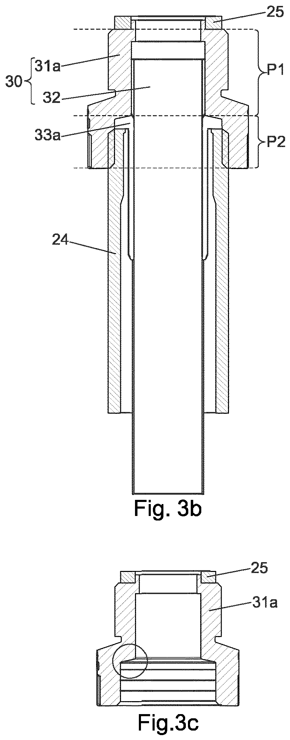

Referring now to Figure 3a, Figure 3a shows a cross sectional view of a connection device according to a second embodiment of the present disclosure. The connection device 30 according to Figure 3a differs from the connection device 20 according to Figure 2, in that the connection device 30 according to Figure 3a does not comprise such protuberances 26-1 and 26-2. Further, instead of the flat gasket 23 according to Figure 2, there is shown in Figure 3a a gasket 33 comprising a soft rotational shape of decreasing or constant cross-section. The gasket 33 may form part of the connection device 30, i.e. the connection device 30 comprising the plastic dielectric 31 and the injection pipe 32, may also comprise the gasket 33. Alternatively, the gasket 33 may form part of the tank pipe 24, and the connection device 30 according to Figure 3a may be such connection device 10 as shown in Figure 1. The gasket 33 extends along a length direction of the injection pipe 32 between the injection pipe 32 and the tank pipe 24. The gasket 33 extends along the length direction for at least 5%, preferably at least 15% of a length L of the tank pipe 24.

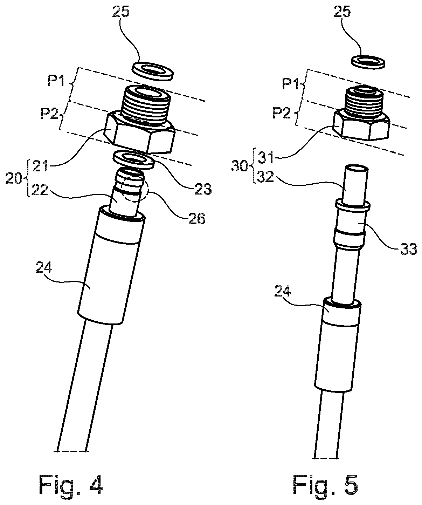

With further reference to Figure 3a, regarding the injection pipe 32, the injection pipe 32 is mounted by friction on the gasket 33, for example an elastomer gasket, like EPDM or Silicone. Furthermore, according to several examples of the present disclosure, there may be a conical shape on this elastomer gasket in order that the material creeps to the injection pipe 32 when the plastic dielectric 31 is screwed. This may allow a perfect locking in position like a cable gland. Please note that such conical shape may manage to block the injection pipe 32 in position inside the tank pipe 24. The plastic dielectric 31 does not need to resist to high torque because only one gasket, i.e. the gasket 33 is used, and furthermore the gasket is an elastomer. Also, the injection pipe 32 is not mounted on the tank pipe 24. By "conical shape", it is meant gasket 33 comprising a soft rotational shape (preferably revolutionary shape) of decreasing or constant cross-section, as derivable as an example from Figure 5, from a first end section of the gasket 33 to a second end section of the gasket, opposite to the first end section. The first end section may be directed towards the plastic dielectric 31 as indicated in Figure 5. In Figure 5, the second end section is directed towards the tank pipe 24. The gasket may have a flat surface. External cross-section of the gasket 33 may decrease, preferably discontinuously, from the first end section towards the second end section.

Referring now to Figure 3b, a further development of the connection device 30 according to Figure 3a is shown. As highlighted in Figure 3c in more detail (see encircled region), the first end section of the gasket 33a, which is in Figure 3b shown to be in contact with the second portion P2 and to face at least partly towards the first portion P1, has an inclined top region. The plastic dielectric 31a comprises a corresponding countershape. In doing so, the gasket 33a may be arranged or fixed more strongly to the injection pipe 32. In general, the plastic dielectric will push, during screwing the plastic dielectric upon the tank pipe 24, the gasket (23, 33 or 33a) horizontally to the injection pipe and therefore block the injection pipe in position. This effect is further increased due to the shape of the gasket 33a and the plastic dielectric 31a as shown in Figure 3b.

Referring now to Figure 4, Figure 4 shows an exploded view of the connection device according to the first embodiment of the present disclosure. In particular, Figure 4 shows an exploded view from the connection device 20 inserted into the tank pipe 24 according to Figure 2. In this exploded view, the protuberances 26-1 and 26-2 are illustrated by protuberance 26.

Referring now to Figure 5, Figure 5 shows an exploded view of the connection device according to the second embodiment of the present disclosure. In particular, Figure 5 shows an exploded view from the connection device 30 inserted into the tank pipe 24 according to Figure 3. In this exploded view, the connection device 30 comprises the soft revolutionary part of the gasket 33, which is arranged around the injection pipe 32.

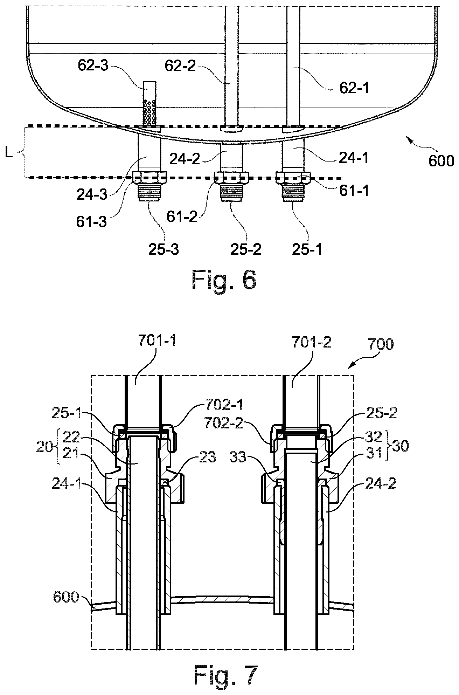

Referring now to Figure 6, Figure 6 shows a domestic hot water tank according to several examples of the present disclosure. The shown domestic hot water tank 600 comprises a first opening forming a tank inlet, for a liquid to enter the domestic hot water tank 600; a second opening forming a tank outlet, for a liquid to exit the domestic hot water tank 600; and a third opening forming a second tank inlet, for a liquid to re-enter the domestic hot water tank 600. The shown domestic hot water tank 600 further comprises tank pipes 24-1, 24-2 and 24-3 mounted each of the first opening, the second opening and the third opening, for the liquid to enter, exit and re-enter the domestic hot water tank 600 through the tank pipes 24-1, 24-2 and 24-3. The tank pipes 24-1, 24-2 and 24-3 have a length L, however, each of the tank pipes 24-1, 24-2 and 24-3 may have a different length. The domestic hot water tank 600 may have more inlets and may have more outlets. A re-enter is optional in this view. Connection devices as outlined above with reference to Figure 2 and/or 3 may be inserted into one or more of the tank pipes 24-1, 24-2 and 24-3. In Figure 6, three connection devices are indicated, a first connection device comprising the plastic dielectric 61-1 and the injection pipe 62-1, a second connection device comprising the plastic dielectric 61-2 and the injection pipe 62-2, and a third connection device comprising the plastic dielectric 61-3 and the injection pipe 62-3. A gasket 25-1, 25-2 and 25-3 is respectively provided at the plastic dielectrics 61-1, 61-2 and 61-3. The injection pipe 62-1, 62-2 and 62-3 are not limited to any length, diameter, shape or design. For example, the injection pipe 62-3 comprises recesses, optionally including guides to direct the flow of water radially to the main tube. The plastic devices are connectable with external pipes (external to the domestic hot water tank 600) for connecting the domestic hot water tank 600 with the external pipe.

Regarding the recesses, it shall be noted that the recesses may be for inlet of cold water as shown in Figure 6, which allows to tape the hottest water because the hottest water is at the highest point of tank and it allows also a stratification (slow flow speed). Recesses for inlet of cold water are provided rather towards the bottom of the tank and allows the stratification. If there are no recesses and a direct flow to the bottom of tank, this may end to mix cold and hot water.

In more detail, injection pipe 62-3 shows a deflector, which is a specific kind of injection pipes. It is used to inject water close to the tank pipe opening and ensuring at the same time that the water will not flow directly to the middle of the tank due to the pressure of the water. Thanks to the deflector, the flow is broken and stays close to the opening.

Thus, according to several examples of the present invention, throughout the present disclosure, it shall be noted that by "injection pipe", it is meant that it is included both type of injection pipe. Namely, a (standard) elongated tube which runs through the tank to the relevant height, and a deflector, which is aimed to prevent high flow entrance of the liquid inside the tank.

Referring now to Figure 7, Figure 7 shows in a cross sectional view a domestic hot water tank assembly according to several examples of the present disclosure. In particular, the domestic hot water tank assembly 700 shows a top portion of a domestic hot water tank 600, comprising an inlet and an outlet for example, into which connection devices 20 and 30 according to Figures 2 and 3 are inserted. External pipes 701-1 and 701-2 are connected to the connection devices 20 and 30, respectively, and are respectively hold in position by nuts 702-1 and 702-2. The external pipes 701-1 and 701-2 may be made of copper.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, examples are described with reference to equipment whereas others are described with reference to uses. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

### Reference Signs

- 10, 20, 30: Connection device
- 11, 21, 31, 61-1, 61-2, 61-3: Dielectric plastic
- 12, 22, 32, 61-1, 62-2, 62,3: Injection pipe
- 23, 33: Gasket elastomer
- 24, 24-1, 24-2, 24-3: Tank pipe
- 25, 25-1, 25-2, 25-3: Gasket
- 26, 26-1, 26-2: Protuberance
- 600: Domestic hot water tank
- 700: Domestic hot water tank assembly
- 701-1, 701-2: External pipe
- 702-1, 702-2: Nut
- L: Length of tank pipe
- P1: First portion of dielectric plastic
- P2: Second portion of dielectric plastic

## Claims

1. A connection device (10, 20, 30) for connecting a tank pipe (24, 24-1, 24-2, 24-3) of a domestic hot water tank (600) with an external pipe (701-1, 701-2) external to the domestic hot water tank (600), the connection device (10, 20, 30) comprising:
an injection pipe (12, 22, 32, 62-1, 62-2, 62-3) configured to be insertable into the tank pipe (24, 24-1, 24-2, 24-3) and configured to guide a liquid through the tank pipe (24, 24-1, 24-2, 24-3) and into the domestic hot water tank (600) or out of the domestic hot water tank (600); and
a plastic dielectric (11, 21, 31, 61-1, 61-2, 61-3) comprising a first portion (P1) and a second portion (P2),
wherein the first portion (P1) directly surrounds at least an end portion of the injection pipe (12, 22, 32, 62-1, 62-2, 62-3)
wherein the second portion (P2) indirectly surrounds the injection pipe (12, 22, 32, 62-1, 62-2, 62-3) and is spaced apart from the injection pipe (12, 22, 32, 62-1, 62-2, 62-3), and
wherein the second portion (P2) is configured to be in contact with an outer surface of the tank pipe (24, 24-1, 24-2, 24-3) and wherein the second portion (P2) is further configured so that, 12, 22, 32, 62-1, 62-2, 62-3)when the injection pipe (12, 22, 32, 62-1, 62-2, 62-3) is inserted into the tank pipe (24, 24-1, 24-2, 24-3), the tank pipe (24, 24-1, 24-2, 24-3) is between the injection pipe (12, 22, 32, 62-1, 62-2, 62-3) and the second portion (P2); and
the plastic dielectric (11, 21, 31, 61-1, 61-2, 61-3) is configured to connect the injection pipe (12, 22, 32, 62-1, 62-2, 62-3) with the external pipe, wherein
the injection pipe (22) is directly connected to the first portion (P1) of the plastic dielectric, and/or
wherein the connection device (10, 20, 30) further comprises a gasket (33) comprising a soft rotational shape of decreasing or constant cross-section, in particular a revolutionary shape, placed between the injection pipe (32) and the second portion (P2) of the plastic dielectric (31).

2. The connection device according to claim 1, wherein the injection pipe (12, 22, 33) is made of an electrically non-conductive material, in particular plastic, or is made of stainless steel.

3. The connection device according to claim 1 or 2, wherein the gasket (33) arranged in direct contact around the injection pipe (32) comprises a first end section partly oriented towards the first portion (P1) and a second end section opposite to the first end section, and wherein the gasket (33) has a flat surface partly oriented towards the first portion (P1), and wherein an external cross-section of the gasket (33) decreases, preferably discontinuously, from the first end section towards the second end section.

4. The connection device according to any one of claims 1 to 3, wherein the injection pipe (22) directly connected to the first portion (P1) comprises that the injection pipe (22) is positioned in the plastic dielectric (21) by at least one of clipping, crimping and plastic soldering.

5. The connection device according to any one of claims 1 to 4, wherein a translation of the injection pipe (22) relative to the plastic dielectric (21) along the injection tube axis is prevented by a protuberance (26, 26-1, 26-2) present on the injection pipe (22) and/or on the plastic dielectric (21), wherein the protuberance (26, 26-1, 26-2) is integrated into the plastic dielectric (21) useable as a clip, or wherein the protuberance (26, 26-1, 26-2) is generated by a crimping process.

6. The connection device according to any one of claims 1 to 5, for the injection pipe (22) directly connected to the first portion (P1), further comprising a flat gasket (23) in contact with an inner surface of the second portion (P2) of the plastic dielectric (21), so that the plastic dielectric (21) is configured to be in further contact with the outer surface of the tank pipe (24, 24-1, 24-2, 24-3) via the flat gasket (23) when the injection pipe (22) is inserted into the tank pipe (24, 24-1, 24-2, 24-3).

7. The connection device according to any one of claims 1 to 6, wherein the plastic dielectric (21) and the injection pipe (22) are made in a single plastic piece.

8. The connection device according to any one of claims 1 to 3, wherein the gasket (33) is an elastomer or a silicone.

9. The connection device according to claim 8, wherein the elastomer is made of EPDM or rubber-like elastomer; and/or wherein the elastomer has a certification for contact with domestic water, in particular with domestic water from 10°C to at least 65°C, preferably from 10°C to 90°C.

10. The connection device according to any one of claims 1 to 3, 8 or 9, wherein the gasket (33) extends along a length direction of the injection pipe (32), and the injection pipe (32) when being inserted into the tank pipe (24, 24-1, 24-2, 24-3) is configured to be installed inside the tank pipe (24, 24-1, 24-2, 24-3) by friction of the gasket (33) with an inner surface of the tank pipe (24, 24-1, 24-2, 24-3).

11. A domestic hot water tank (600), comprising:
a first opening forming a tank inlet, for a liquid to enter the domestic hot water tank (600);
a second opening forming a tank outlet, for a liquid to exit the domestic hot water tank (600);
optionally a third opening forming a second tank inlet, for a liquid to re-enter the domestic hot water tank (600);
a tank pipe (24-1, 24-2, 24-3) mounted at one of the first opening, the second opening and/or the third opening, for the liquid to enter, exit or re-enter the domestic hot water tank (600) through the tank pipe (24-1, 24-2, 24-3); and
a connection device (10, 20, 30) according to any one of claims 1 to 10, wherein the connection device is inserted into the tank pipe (24-1, 24-2, 24-3) and is connectable with an external pipe external (701-1, 701-2) to the domestic hot water tank (600) for connecting the domestic hot water tank (600) with the external pipe (701-1, 701-2).

12. The domestic hot water tank (600) according to claim 11,
wherein the flat gasket (23) is in direct contact with the plastic dielectric (21), the injection pipe (22) and the tank pipe (24) for achieving water tightness,
wherein the gasket (33) is in direct contact with the plastic dielectric (31), the injection pipe (32) and the tank pipe (24) for achieving water tightness.

13. The domestic hot water tank (600) according to claim 11 or 12,
wherein the connection device comprises the soft revolutionary part of the gasket (33),
wherein the soft revolutionary part of the gasket (33) extends along a length direction of the injection pipe (32) between the injection pipe (32) and the tank pipe (24, 24-1, 24-2, 24-3), and
wherein the soft revolutionary part of the gasket (33) extends along the length direction for at least 5%, preferably at least 15% of a length (L) of the tank pipe (24, 24-1, 24-2, 24-3).

14. A domestic hot water tank assembly (700), comprising
the domestic hot water tank (600) according to any one of claims 11 to 13;
and an external pipe (701-1, 701-2) external to the domestic hot water tank (600);
wherein the external pipe (701-1, 701-2) is connected to the domestic hot water tank (600) via the connection device of the domestic hot water tank (600); and
wherein the external pipe (701-1, 701-2) is made of copper.

15. An assembly kit comprising the connection device (10, 20, 30) according to any one of claims 1 to 10.
